# EUROPEAN PATENT APPLICATION

(11) **EP 4 726 011 A1**
(43) Date of publication of application: **15.04.2026**
(21) Application number: 24819204.9
(22) Date of filing: 27.05.2024
(51) Int. Cl.: C09K 21/10, C08K 5/17, C08K 5/51, C08K 5/3432, C08K 5/5313, C08K 5/5333, C08L 101/00, C09K 21/12

(54) **FLAME RETARDANT, COMPOSITION, AND MOLDED ARTICLE**

(30) Priority: 09.06.2023 JP 2023095888; 07.02.2024 JP 2024016994
(71) Applicant: ADEKA CORPORATION, Arakawa-ku Tokyo 116-8554 (JP)
(72) Inventor: SHIMIZU, Keisuke, Tokyo 116-8554 (JP); UMEKI, Tsutomu, Tokyo 116-8554 (JP); NAKAMURA, Tatsuhito, Tokyo 116-8554 (JP)
(74) Representative: Forstmeyer, Dietmar
(86) International application number: PCT/JP2024/019426
(87) International publication number: WO 2024/252972

(57) **Abstract**

A flame retardant system that contains an N-alkyl type hindered amine compound and imparts excellent flame retardancy to synthetic resins. The flame retardant system includes (A) a hindered amine compound represented by general formula (1): 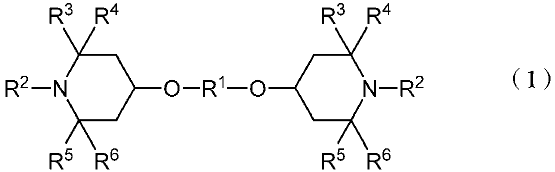 wherein R¹ represents a carbonyl group, etc.; R² represents a hydrocarbon group having 1 to 18 carbon atoms; and R³, R⁴, R⁵, and R⁶ are each independently an alkyl group having 1 to 4 carbon atoms.

## Description

### Technical Field

This invention relates to a flame retardant system containing a hindered amine compound having a specific structure, a composition containing the flame retardant system, and a molded article made from the composition.

### Background Art

Synthetic resins are used in a wide range of applications due to their versatility but have the drawback of flammability. Various techniques have been proposed for imparting flame retardancy to the synthetic resins. It is known as one such techniques that hindered amine compounds are effective as flame retardants.

Patent literature 1 (PTL 1) listed below discloses the use of a NOR-HALS compound with a specific structure as a flame retardant for polymers. Patent literature 2 (PTL 2) describes a resin composition useful as a solar cell sealant, and this composition comprises an olefin resin material and a NOR type hindered amine flame retardant. Patent literature 3 (PTL 3) proposes a laminate structure composed of a plurality of layers, each containing a polypropylene resin and a NOR type hindered amine compound. Paragraph [0076] of PTL 2 states that an N-methyl type hindered amine compound is not considered to exhibit flame retardant performance comparable to that of a NOR type hindered amine derivative. PTL 3, paragraph [0067], says that the use of an N-methyl type hindered amine stabilizer results in reduced flame retardance compared to the use of NOR type hindered amine stabilizers.

Patent literature 4 (PTL 4) proposes use of a hindered amine compound that is not of N-alkoxy type, and specifically discloses a flame retardant resin composition comprising a base resin containing a polyolefin resin, a flame retardant, and a flame retardant synergist including the hindered amine compound. Examples of PTL 4 use a N-alkyl type hindered amine compound. However, it is also disclosed in PTL4 that the flame retardance of the flame retardant resin composition is more increased when using a hindered amine compound with a NOR-containing group. The results obtained in Examples demonstrate the superiority in flame retardance of the hindered amine compounds with a NOR-containing group over those without. In addition, the hindered amine compounds of PTL 4 are used as a synergist for the main flame retardant and it is not disclosed that the hindered amine compounds of PTL 4 function alone as a flame retardant.

### Citation List

### Patent Literature:

PTL 1: US 2015/0284535A1
PTL 2: JP 2012-015402A
PTL 3: JP 2018-039134A
PTL 4: JP 2021-042334A

### Summary Of Invention

### Technical Problem:

The N-alkoxy hindered amine compound described in PTL 1 can impart high flame retardancy to resins but is liquid at room temperature. Adding a liquid additive to a resin requires special equipment for handling liquids, which makes it more difficult to handle than solid additives. Furthermore, the N-alkoxy hindered amine compounds of PTLs 1 to 4 must be made from costly materials, and the preparation process is complicated, resulting in higher production costs.

On the other hand, N-alkyl hindered amine compound can be prepared from inexpensive materials, which could reduce the production costs. However, as described in PTLs 1 to 4, none of the known N-alkyl hindered amine compounds exhibit excellent flame retardant performance.

An object of the invention is to provide a flame retardant system that contains an N-alkyl type hindered amine compound and imparts excellent flame retardancy to synthetic resins.

### Solution to Problem

As a result of extensive investigations, the inventors have found that a flame retardant system containing an N-alkyl type hindered amine compound with a specific structure accomplishes the above object and thus completed the invention.

The invention provides a flame retardant system including (A) a hindered amine compound represented by general formula (1): 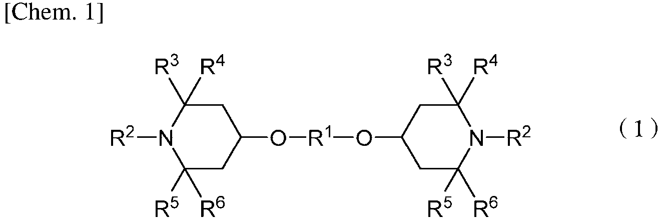
wherein R¹ represents a group of formula (2), (3), or (4) below; R² represents a hydrocarbon group having 1 to 18 carbon atoms; and R³, R⁴, R⁵, and R⁶ each independently represent an alkyl group having 1 to 4 carbon atoms. 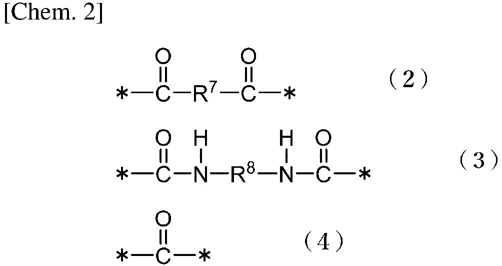
wherein R⁷ and R⁸ each independently represent a direct bond or a divalent hydrocarbon group having 1 to 18 carbon atoms; and the asterisk represents a bonding site.

The invention also provides a composition including the flame retardant system and a synthetic resin, and a flame retardant obtained from the composition.

### Advantageous Effects of Invention

The invention provides a flame retardant system that imparts excellent flame retardancy to synthetic resins, a composition containing the flame retardant system, and a molded article of the composition.

### Description of Embodiments

The invention will be elaborated upon on the basis of its embodiments.

### I. Flame Retardant system

The flame retardant system of the invention contains a hindered amine compound (A) (hereinafter sometimes referred to as component (A)). The hindered amine compound (A) is represented by general formula (1): 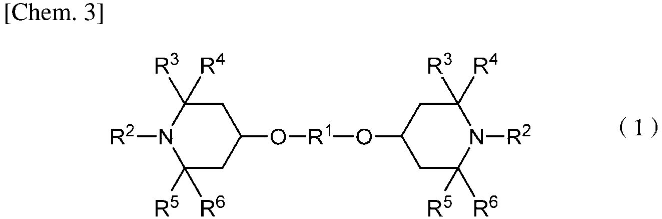 wherein R¹ represents a group of formula (2), (3), or (4) below; R² represents a hydrocarbon group having 1 to 18 carbon atoms; and R³, R⁴, R⁵, and R⁶ each independently represent an alkyl group having 1 to 4 carbon atoms. 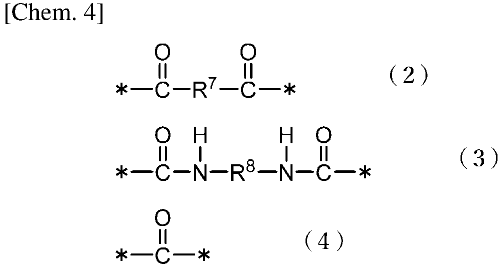 wherein R⁷ and R⁸ each independently represent a direct bond or a divalent hydrocarbon group having 1 to 18 carbon atoms; and the asterisk represents a bonding site.

Although the reason the flame retardant system containing the specific hindered amine compound (A) among various hindered amine compounds exhibits excellent flame retardant performance remains to be elucidated, the following assumption can be made.

Flame retardant effects of hindered amine type flame retardants are exhibited through the scavenging of hydroxy radicals or alkyl peroxy radicals, which are generated in the gas phase during the resin combustion, by the hindered amine moiety. The hindered amine compound (A) in the flame retardant system of the invention possesses a hindered amine structure at each end of its linear molecular chain. Consequently, the hindered amine structures are dispersed moderately within the synthetic resin, thereby enhancing the radical scavenging efficiency in the gas phase during combustion and therefore leading to the excellent flame retardancy.

In formula (1), R¹ is preferably the group of formula (2) or (3), more preferably the group of formula (2). Such preference for R¹ enhances more the flame retardant performance of the flame retardant system.

The C1-C18 hydrocarbon group as represented by R² in formula (1) includes C1-C18 aliphatic hydrocarbon groups and C6-C18 aromatic hydrocarbon groups. Examples of the C1-C18 aliphatic hydrocarbon groups include C1-C18 alkyl, C2-C18 alkenyl, and C3-C18 cycloalkyl groups.

Examples of the C1-C18 alkyl groups, which may be either straight or branched, include methyl, ethyl, propyl, isopropyl, butyl, isobutyl, sec-butyl, tert-butyl, pentyl, isopentyl, neopentyl, tert-pentyl, hexyl, heptyl, octyl, isooctyl, tert-octyl, 2-ethylhexyl, nonyl, isononyl, decyl, isodecyl, 2-propylheptyl, undecyl, dodecyl, tetradecyl, hexadecyl, and octadecyl.

Examples of the C2-C18 alkenyl groups, which may be either straight or cyclic, include vinyl, 2-propenyl, 2-butenyl, 3-butenyl, 3-pentenyl, 4-pentenyl, 2-hexenyl, 3-hexenyl, 5-hexenyl, 2-heptenyl, 3-heptenyl, 4-heptenyl, 3-octenyl, 3-nonenyl, 4-decenyl, 3-undecenyl, 4-dodecenyl, 3-cyclohexenyl, 2,5-cyclohexadienyl-1-methyl, and 4,8,12-tetradecatrienylallyl.

Examples of the C3-C18 cycloalkyl groups include cyclopropyl, cyclobutyl, cyclopentyl, cyclohexyl, cycloheptyl, cyclooctyl, cyclooctadecyl, 2-bornyl, 2-isobornyl, 1-adamantyl, methylcyclopentyl, methylcyclohexyl, dimethylcyclohexyl, and methylcycloheptyl.

Examples of the C6-C18 aromatic hydrocarbon groups include phenyl, tolyl, xylyl, cumenyl, mesityl, benzyl, naphthyl, azulenyl, indenyl, indanyl, tetralinyl, phenanthryl, pyrenyl, and biphenyl.

R² in formula (1) is preferably a C1-C18 alkyl or C3-C18 cycloalkyl group. The C1-C18 alkyl group as R² is preferably C1-C8 alkyl, more preferably C1-C4 alkyl, and even more preferably methyl. The C3-C18 cycloalkyl group as R² is preferably C3-C8 cycloalkyl, more preferably C5-C7 cycloalkyl, and even more preferably cyclohexyl. The above preference for R² enhances more the flame retardant performance of the flame retardant system of the invention.

The C1-C4 alkyl groups as represented by R³, R⁴, R⁵, and R⁶ in formula (1) include methyl, ethyl, propyl, isopropyl, butyl, isobutyl, sec-butyl, and tert-butyl. R³, R⁴, R⁵, and R⁶ are each preferably methyl or ethyl, and more preferably methyl. Such preference enhances more the flame retardant performance of the flame retardant system of the invention.

The C1-C18 divalent hydrocarbon groups as represented by R⁷ in formula (2) and R³ in formula (3) include C1-C18 alkylene groups, C2-C18 alkenylene groups, C4-C18 cycloalkylene groups, and C6-C18 arylene groups.

Examples of the C1-C18 alkylene group, which may be straight or branched, include methylene, ethylene, n-propylene, isopropylene, n-butylene, isobutylene, n-pentylene, isopentylene, n-hexylene, isohexylene, n-heptylene, isoheptylene, n-octylene, isooctylene, n-nonylene, isononylene, n-decylene, isodecylene, n-undecylene, isoundecylene, n-dodecylene, isododecylene, tridecylene, tetradecylene, pentadecylene, hexadecylene, heptadecylene, and octadecylene.

Examples of the C2-C18 alkenylene group, which may be straight or branched, include vinylene, 1-methylethenylene, 2-methylethenylene, propenylene, butenylene, isobutenylene, pentenylene, hexenylene, heptenylene, octenylene, decenylene, dodecenylene, tetradecenylene, hexadecenylene, and octadecenylene.

Examples of the C4-C18 cycloalkylene group include cyclobutylene, cyclopentylene, 2-methylcyclopentylene, cyclohexylene, 1,3-dimethylcyclohexylene, cycloheptylene, 1-ethylcyclopentylene, cyclooctylene, cyclononylene, cyclodecylene, cycloundecylene, cyclododecylene, cyclotridelene, cyclotetradecylene, cyclopentadecylene, cyclohexadecylene, cycloheptadecylene, cyclooctadecylene, norbornylene, dicyclopentylene, isopropylidenedicyclohexylene, and cyclohexanedimethylene.

Examples of the C6-C18 arylene group include phenylene, tolylene, xylylene, naphthylene, biphenylene, phenanthrylene, fluorenylene, indenylene, isopropylidenediphenylene, and dimethylenephenylene.

R⁷ in formula (2) and R⁸ in formula (3) are each preferably a direct bond, a C1-C18 alkylene group, or a C6-C18 arylene group, and more preferably a C1-C18 alkylene group. The C1-C18 alkylene group as R⁷ or R⁸ is preferably a C2-C14, more preferably C2-C10, and even more preferably C4-C8 alkylene group. The C6-C18 arylene group as R⁷ or R⁸ is preferably a C6-C12, more preferably C6-C10 arylene group, and even more preferably phenylene. The above preference for R⁷ and R⁸ enhances more the flame retardant performance of the flame retardant system of the invention.

The hindered amine compound of formula (1) can be prepared using any known processes. For example, the hindered amine compound can be obtained by the reaction between a dicarboxylic acid corresponding to formula (2) or its derivative, a diisocyanate corresponding to formula (3), or a carbonate precursor corresponding to formula (4) and an alcohol having an N-alkyl-2,2,6,6-tetramethylpiperidinol structure. Specific examples of the reaction include direct esterification between an acid and an alcohol, reaction between an acid halide and an alcohol, an interesterification reaction, and a urethane linkage formation reaction between an isocyanate and an alcohol. Alternatively, the compound of formula (1) can be prepared by the reaction between a dicarboxylic acid corresponding to formula (2) or its derivative, a diisocyanate corresponding to formula (3), or a carbonate precursor corresponding to formula (4) and an alcohol having an N-H-2,2,6,6-tetramethylpiperidinol structure, followed by an N-alkylation reaction with, e.g., an alkyl halide. If necessary, the compound obtained by, for example, a process as described above may be further isolated and purified by filtration, concentration, distillation, extraction, crystallization, recrystallization, adsorption, column chromatography, or a combination thereof.

The hindered amine compounds of formula (1) may be used as component (A) either individually or in combination of two or more thereof having different R¹ through R⁶ groups.

Specific examples of the compound of formula (1) include compound Nos. 1 through 16 shown below. These compounds may be used either individually or in combination of two or more thereof.

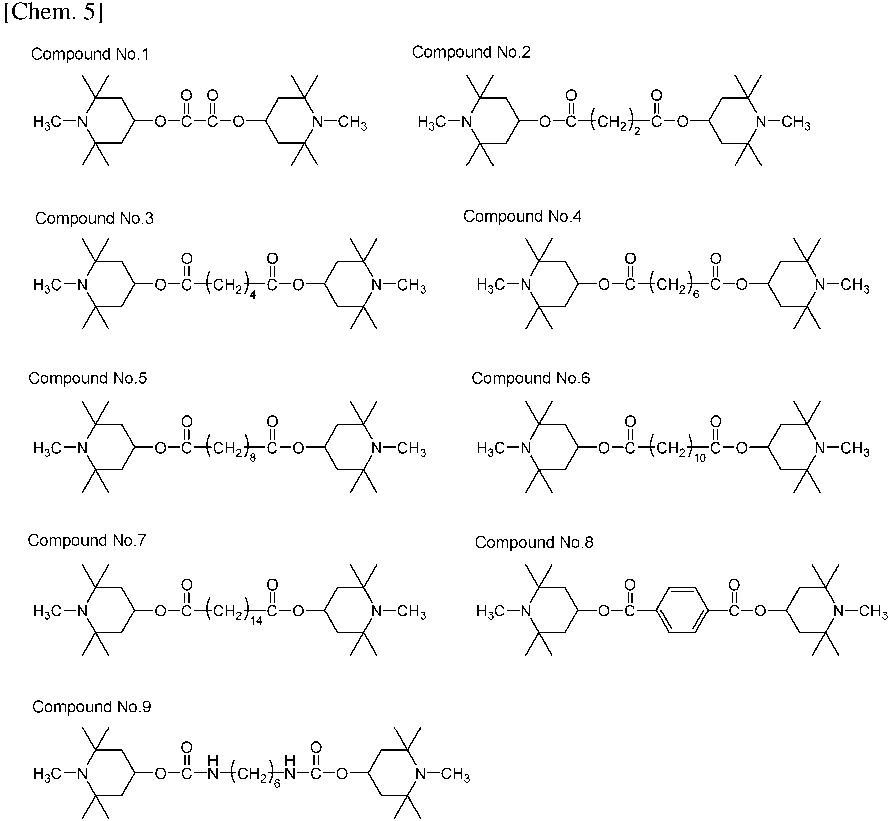

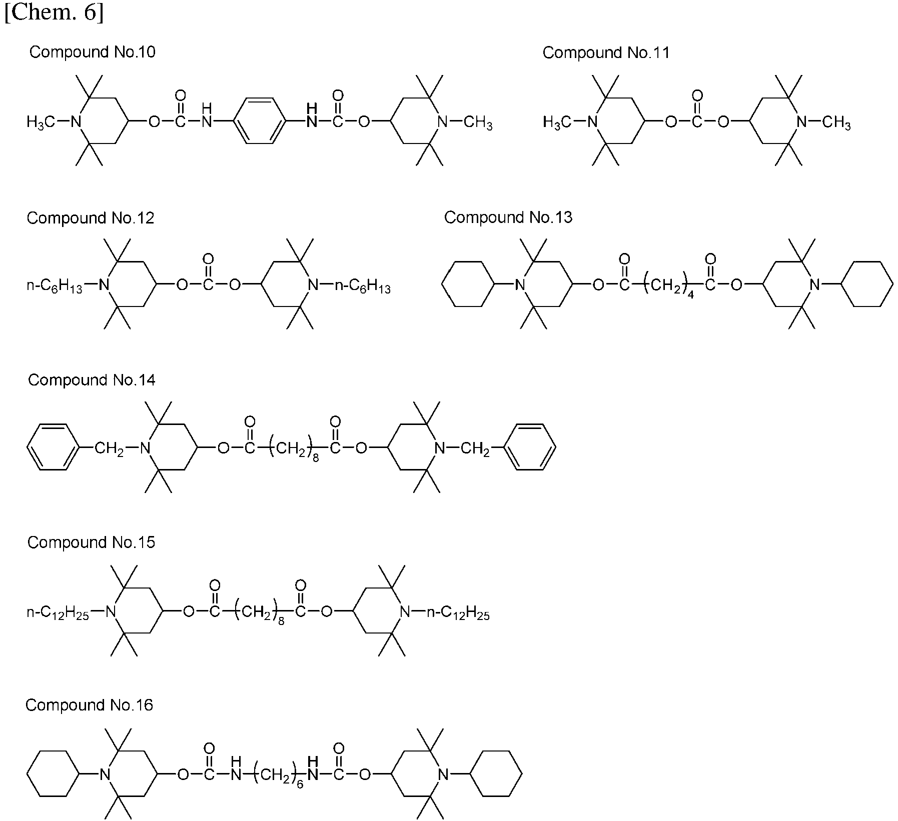

Of these compounds, Nos. 2 to 13 are preferred, Nos. 2, 3, 4, 5, 6, 8, and 9 are more preferred, and Nos. 3, 4, 5 are even more preferred, because of their excellent flame retardant performance.

When the flame retardant system of the invention does not contain a phosphorus flame retardant (B) (hereinafter sometimes referred to as component (B)), which will be described later, the hindered amine compound (A) is present in an amount of preferably at least 50 parts by mass, more preferably 80 parts by mass or more, and even more preferably 90 parts by mass or more, per 100 parts by mass of the flame retardant system. The above preference allows the hindered amine compound (A) to stably exhibit flame retardant performance.

When the flame retardant system of the invention contains a phosphorus flame retardant (B), the hindered amine compound (A) is present in an amount of preferably at least 2 parts by mass, more preferably 3 parts by mass or more, and even more preferably 5 parts by mass or more, per 100 parts by mass of the flame retardant system Such preference allows the hindered amine compound (A) to stably exhibit flame retardant performance.

When the flame retardant system of the invention contains a phosphorus flame retardant (B), the hindered amine compound (A) is present in an amount of preferably 50 parts by mass or less, more preferably 30 parts by mass or less, and even more preferably 20 parts by mass or less, per 100 parts by mass of the flame retardant system. Such preference leads to flame retardancy sufficiently improved by the combination use of the hindered amine compound (A) with the phosphorus flame retardant (B).

The flame retardant system of the invention preferably contains a phosphorus flame retardant (B), which enhances more the flame retardant performance of the flame retardant system.

The phosphorus flame retardant (B) is not particularly limited as long as it is a phosphorus-containing flame retardant and may be either synthesized through a known process or be commercially available one.

The phosphorus flame retardant (B) includes phosphoric ester flame retardants, phosphonic ester flame retardants, phosphinic ester flame retardants, phosphinic acid metal salt flame retardants, phosphazene flame retardants, phosphoric acid salt flame retardants, and red phosphorus.

Examples of the phosphoric ester flame retardants include triaryl phosphates, such as triphenyl phosphate, tricresyl phosphate, trixylenyl phosphate, cresyl diphenyl phosphate, xylyl diphenyl phosphate, cresyl bis(2,6-xylenyl) phosphate, and 2-ethylhexyl diphenyl phosphate; aromatic phosphates or polycondensates thereof, such as resorcinol bis(diphenyl phosphate), hydroquinone bis(diphenyl phosphate), bisphenol A bis(diphenyl phosphate), bisphenol A bis(dicresyl phosphate), 4,4'-biphenol bis(diphenyl phosphate), resorcinol bis(2,6-xylenyl phosphate), and 4,4'-biphenol bis(2,6-xylenyl phosphate); and haloalkyl phosphates, such as tris(chloroethyl) phosphate, tris(chloropropyl) phosphate, tris(dicloropropyl) phosphate, tris(tribromopropyl) phosphate.

Examples of the phosphonic ester flame retardants include divinyl phenylphosphonate, diallyl phenylphosphonate, 1-butenyl phenylphosphonate, pentaerythritol bis(methyl phosphonate), pentaerythritol bis(benzyl phosphonate), 10-phenoxy-9,10-dihydro-9-oxa-10-phosphaphenanthrene 10-oxide, 6,6'-(1,3-phenylenebis(oxy)) bis(6H-dibenz[c,e][1,2]oxaphospholine 6,6'-dioxide.

Examples of phosphinic ester flame retardants include phenyl diphenylphosphinate, methyl diphenylphosphinate, 9,10-dihydro-9-oxa-10-phosphaphenanthrene 10-oxide (DOPO), and DOPO derivatives. Examples of the DOPO derivatives include 10-benzyl-9,10-dihydro-9-oxa-10-phosphaphenanthrene 10-oxide, 10-(2,5-dihydroxyphenyl)-9,10-dihydro-9-oxa-10-phosphaphenanthrene 10-oxide, 10-(2,7-dihydroxynaphthyl)-9,10-dihydro-9-oxa-10-phosphaphenanthrene 10-oxide, and 6,6'-(1,2-ethanediyl) bis(6H-dibenz[c,e][1,2]oxaphospholine) 6,6'-dioxide.

Examples of the phosphinic acid metal salt flame retardants include aluminum diethylphosphinate, calcium diethylphosphinate, and zinc diethylphosphinate.

Examples of the phosphazene flame retardants include bis(2-allylphenoxy) phosphazene, dicresyl phosphazene, propoxyphosphazene, phenoxyphosphazene, aminophosphazene, poly(fluoroalkylphosphazene), and dipropoxyphosphazene.

Examples of the phosphoric acid salt flame retardants include melamine phosphate, melamine pyrophosphate, melamine polyphosphate, melam polyphosphate, ammonium phosphate, ammonium pyrophosphate, ammonium polyphosphate, piperazine phosphate, piperazine pyrophosphate, and piperazine polyphosphate.

The phosphorus flame retardant (B) is preferably selected from the phosphoric ester flame retardants, phosphonic ester flame retardants, phosphinic ester flame retardants, and phosphinic acid metal salt flame retardants, more preferably from phosphonic ester flame retardants and phosphinic ester flame retardants, in terms of improvement of flame retardancy.

In using the phosphonic ester flame retardant as the phosphorous flame retardant (B), one or more selected from pentaerythritol bis(methyl phosphonate), pentaerythritol bis(benzyl phosphonate), and 10-phenoxy-9,10-dihydro-9-oxa-10-phosphaphenanthrene 10-oxide are preferred in terms of improvement of flame retardancy.

In using the phosphinic ester flame retardant as the phosphorus flame retardant (B), one or more selected from DOPO and DOPO derivatives are preferred, with 6,6'-(1,2-ethanediyl) bis(6H-dibenz[c,e][1,2]oxaphospholine) 6,6'-dioxide being more preferred, in terms of the improvement of flame retardancy.

The above-described phosphorus flame retardants may be used either individually or in combination of two or more thereof as component (B). In the latter case, a combination of two or more phosphonic ester flame retardants, a combination of a phosphonic ester flame retardant and a phosphoric ester flame retardant, or a combination of a phosphonic ester flame retardant and a phosphinic acid metal salt flame retardant are preferred, in terms of the improvement of flame retardancy.

When the flame retardant system of the invention contains the phosphorus flame retardant (B), the amount of the phosphorus flame retardant (B) is preferably 10 parts by mass or more, more preferably 200 parts by mass or more, and even more preferably 300 parts by mass or more, per 100 parts by mass of the hindered amine compound (A). This sufficiently produces the flame retardancy-improving effect of the combination use of the hindered amine compound (A) with the phosphorus flame retardant (B). When the flame retardant system of the invention contains the phosphorus flame retardant (B), the amount of the phosphorus flame retardant (B) is preferably 5,000 parts by mass or less, more preferably 3,000 parts by mass or less, and even more preferably 1,500 parts by mass or less, per 100 parts by mass of the hindered amine compound (A). This allows the hindered amine compound (A) to stably exhibit its flame retardant performance, and this also prevents bleeding when the flame retardant system is incorporated into a resin.

The flame retardant system of the invention preferably optionally contains a nitrogen flame retardant as component (C) (hereinafter also referred to as nitrogen flame retardant (C)) in addition to the phosphorus flame retardant (B), in view of further improving the flame retardant performance of the flame retardant system of the invention.

The nitrogen flame retardant (C) is not limited to a specific type as long as it contains nitrogen. The nitrogen flame retardant (C) may be either one synthesized through a known process or be commercially available one. Provided that those included under the phosphorus flame retardant (B) are excluded.

Examples of the nitrogen flame retardant (C) include melamine, melamine cyanurate, poly[2,4-(piperazin-1,4-yl)-6-(morpholin-4-yl)-1,3,5-triazine], melamine sulfate, guanidine sulfate, and guanidine sulfamate. These may be used as the nitrogen flame retardant (C) either individually or in combination of two or more thereof.

When the flame retardant system of the invention contains the nitrogen flame retardant (C), the amount of the nitrogen flame retardant (C) is preferably 10 parts by mass or more, more preferably 200 parts by mass or more, and even more preferably 300 parts by mass or more, per 100 parts by mass of the hindered amine compound (A), whereby the flame retardancy-improving effect of the combination use of the hindered amine compound (A), the phosphorus flame retardant (B), and the nitrogen flame retardant (C) is sufficiently exhibited. When the flame retardant system of the invention contains the nitrogen flame retardant (C), the amount of the nitrogen flame retardant (C) is preferably 4,000 parts by mass or less, more preferably 2,000 parts by mass or less, and even more preferably 1,000 parts by mass or less, per 100 parts by mass of the hindered amine compound (A). This allows the hindered amine compound (A) to stably exhibit its flame retardant performance, and this also prevents bleeding when incorporated into a resin.

When the flame retardant system of the invention contains the nitrogen flame retardant (C), the amount of the nitrogen flame retardant (C) is preferably 10 parts by mass or more, more preferably 20 parts by mass or more, and even more preferably 30 parts by mass or more, per 100 parts by mass of the phosphorus flame retardant (B), whereby the flame retardancy-improving effect of the combination use of the hindered amine compound (A), the phosphorus flame retardant (B), and the nitrogen flame retardant (C) is sufficiently exhibited. When the flame retardant system of the invention contains the nitrogen flame retardant (C), the amount of the nitrogen flame retardant (C) is preferably 700 parts by mass or less, more preferably 300 parts by mass or less, and even more preferably 200 parts by mass or less, per 100 parts by mass of the phosphorus flame retardant (B). This allows the hindered amine compound (A) to stably exhibit its stable flame retardant performance.

### II. Composition

The composition of the invention contains the above-described flame retardant system and a synthetic resin. The flame retardant system of the invention can be incorporated into a synthetic resin, specifically preferably a thermoplastic resin, to create a resin composition.

In view of sufficiently exhibiting the performance of the flame retardant system, the composition of the invention contains the flame retardant system preferably in an amount of at least 0.1 part by mass, more preferably 0.3 parts by mass or more, even more preferably 0.5 parts by mass or more, and still more preferably 1 part by mass or more, per 100 parts by mass of the composition. In view of preventing the bleeding of the flame retardant components, the amount of the flame retardant system is preferably 20 parts by mass or less, more preferably 15 parts by mass or less, and even more preferably 10 parts by mass or less, per 100 parts by mass of the composition.

In view of sufficiently exhibiting the performance of the flame retardant system, the amount of the flame retardant system in the composition is preferably 0.1 part by mass or more, more preferably 0.3 parts by mass or more, even more preferably 0.5 parts by mass or more, and still more preferably 0.1 part by mass or more, per 100 parts by mass of the synthetic resin. In view of preventing the bleeding of the flame retardant components, the amount of the flame retardant system is preferably 20 parts by mass or less, more preferably 15 parts by mass or less, and even more preferably 10 parts by mass or less, per 100 parts by mass of the synthetic resin.

Examples of the synthetic resin includes thermoplastic resins, such as polyolefin resins, styrene resins, polyester resins, polycarbonate resins, polysulfide resins, polyamide resins, polyether resins, and halogen-containing resins.

Examples of the polyolefin resins include polyethylene resins, such as low-density polyethylene, linear low-density polyethylene, high-density polyethylene, crosslinked polyethylene, and ultra-high molecular weight polyethylene; polypropylene resins, such as homopolypropylene, random copolymer polypropylene, block copolymer polypropylene, impact copolymer polypropylene, high-impact copolymer polypropylene, and maleic anhydride-modified polypropylene; α-olefin polymers, such as polybutene-1, cycloolefin polymers, poly(3-methyl-1-butene), poly(3-methyl-1-pentene), and poly(4-methyl-1-pentene); and α-olefin copolymers, such as ethylene-methyl methacrylate copolymers and ethylene-vinyl acetate copolymers.

In view of enhancing flame retardancy, the polyolefin resins preferably have a melt flow rate (MFR) of 0.05 g/10 min or higher, more preferably 0.5 g/10 min or higher, and even more preferably 0.8 g/10 min or higher, and preferably 30 g/10 min or lower, more preferably 20 g/10 min or lower, and even more preferably 15 g/10 min or lower. The MFR referred to here is a value measured in accordance with JIS K7210.

Examples of the styrene resins include syndiotactic polystyrene and acrylonitrile-butadiene-styrene terpolymers.

Examples of the polysulfide resins include polyphenylene sulfide.

Examples of the polyamide resins include polyhexamethylene adipamide.

Examples of the polyester resins include polyalkylene terephthalates, such as polyethylene terephthalate, polybutylene terephthalate, polytetramethylene terephthalate, and polycyclohexanedimethylene terephthalate; polyalkylene naphthalates, such as polyethylene naphthalate and polybutylene naphthalate; and degradable aliphatic polyesters, such as polyhydroxybutyrate, polycaprolactone, polybutylene succinate, polyethylene succinate, polylactic acid, polymalic acid, polyglycolic acid, polydioxane, and poly(2-oxetanone).

The polycarbonate resins are resins having a carbonate bond which are obtained, for example, by the polymerization reaction between a dihydroxy aromatic compound and a carbonate precursor.

Examples of the dihydroxy aromatic compound include dihydroxybenzenes, such as resorcin and hydroquinone; bishydroxyaryls, such as 4,4'-dihydroxydiphenyl; bis(hydroxyaryl)alkanes, such as bis(4-hydroxyphenyl)methane, 1,1-bis(4-hydroxyphenyl)ethane, 1,2-bis(4-hydroxyphenoxy)ethane, and 2,2-bis(4-hydroxyphenyl)propane; dihydroxyarylketones, such as bis(4-hydroxyphenyl) ketone and bis(4-hydroxy-3-methylphenyl) ketone; dihydroxyaryl ethers, such as 4,4'-dihydroxydiphenyl ether, 4,4'-dihydroxy-3,3'-dimethylphenyl ether, and 4,4'-dihydroxy-2,5-dihydroxydiphenyl ether; dihydroxyaryl sulfur compounds, such as 4,4'-thiodiphenol, bis(4-hydroxyphenyl) sulfide, 4,4'-dihydroxy-3,3'-dimethyldiphenyl sulfide, 4,4'-dihydroxy-3,3'-dimethyldiphenyl sulfoxide, 4,4'-dihydroxy-3,3'-dimethyldiphenyl sulfoxide, 2,2-bis(4-hydroxyphenyl) sulfone, 4,4'-dihydroxydiphenyl sulfone, and 4,4'-dihydroxy-3,3'-dimethyldiphenyl sulfone; and phenolphthalein. These dihydroxy aromatic compounds may be used either individually or in combination of two or more thereof. They may be used in combination with a polyhydroxy aromatic compound having three or more hydroxy groups.

Examples of suitable carbonate precursors include phosgene, carbonic diesters, diphenyl carbonate, dihydric phenol dihaloformates, and mixtures thereof.

Other examples of the synthetic resins include petroleum resins, chroman resins, polyvinyl acetate, acrylic resins, polymethyl methacrylate, polyvinyl alcohol, polyvinyl formal, polyvinyl butyral, polyurethane, cellulosic resins, polyimide resins, polysulfones, liquid crystal polymers, and polyblends of these synthetic resins.

The synthetic resins may be thermoplastic elastomers, including isoprene rubber, butadiene rubber, ethylene-propylene rubber, ethylene-propylene-diene rubber, acrylonitrile-butadiene copolymer rubber, styrene-butadiene copolymer rubber, olefinic elastomers, styrenic elastomers, polyester elastomers, nitrile elastomers, nylon elastomers, vinyl chloride elastomers, polyamide elastomers, and polyurethane elastomers.

Of these, the synthetic resin is preferably at least one member selected from the group consisting of polyolefin resins, styrene resins, and copolymers thereof in view of more effectively exhibiting the flame retardant performance of the flame retardant system. The synthetic resin is more preferably at least one member selected from polyolefin resins, and even more preferably at least one member selected from high-density polyethylene, low-density polyethylene, and linear low-density polyethylene. It is also preferable to use one or more of these resins in combination with one or more thermoplastic elastomers.

The synthetic resins recited above can be used irrespective of molecular weight, degree of polymerization, polymerization method, density, softening point, solvent-insoluble content, degree of stereoregularity, presence or absence of catalyst residue, type and ratio of monomers as starting materials, type of catalyst for polymerization, and so forth. The synthetic resins may be used either individually or in combination of two or more thereof. The synthetic resins may be blended to form a polymer alloy.

In view of fully demonstrating the physical properties inherent to the synthetic resin, the amount of the synthetic resin in the composition of the invention is preferably 80 parts by mass or more, more preferably 85 parts by mass or more, and even more preferably 90 parts by mass or more, per 100 parts by mass of the composition. In view of securing the requisite amount of the flame retardant system to allow the composition to exhibit expected flame retardancy, the amount of the resin in the composition is preferably 99.9 parts by mass or less, more preferably 99.7 parts by mass or less, even more preferably 99.5 parts by mass or less, and particularly preferably 99 parts by mass or less, per 100 parts by mass of the composition.

The composition of the invention may optionally contain other additives in addition to the flame retardant system. For instance, the composition can be stabilized by incorporating therein any of phenol antioxidants, phosphorus antioxidants, thioether antioxidants, UV absorbers, hindered amine light stabilizers, and so on.

Examples of the phenol antioxidants include 2,6-di-tert-butyl-p-cresol, 2,6-diphenyl-4-octadecyloxyphenol, distearyl (3,5-di-tert-butyl-4-hydroxybenzyl) phosphonate, 1,6-hexamethylenebis[(3,5-di-tert-butyl-4-hydroxyphenyl)propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzen, 2-tert-butyl-4-methyl-6-(2-acryloyloxy-3-tert-butyl-5-methylbenzyl)phenol, stearyl (3,5-di-tert-butyl-4-hydroxyphenyl) propionate, tetrakis[3-(3,5-di-tert-butyl-4-hydroxyphenyl)methyl propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-4-hydroxyphenyl)propionyloxyethyl] isocyanurate, 3,9-bis [1,1-dimethyl-2- { (3-tert-butyl-4-hydroxy-5-methylphenyl)propionyloxy } ethyl]-2,4 ,8,10-tetraoxaspiro[5,5]undecane, and triethylene glycol bis[(3-tert-butyl-4-hydroxy-5-methylphenyl)propionate]. These phenol antioxidants may be used either individually or in combination of two or more thereof. In view of antioxidant effect, the phenol antioxidant is preferably used in an amount of 0.001 to 10 parts by mass, more preferably 0.05 to 5 parts by mass, per 100 parts by mass of the synthetic resin.

Examples of the phosphorus antioxidants include trisnonylphenyl phosphite, tris(2,4-di-tert-butylphenyl) phosphite, tris[2-tert-butyl-4-(3-tert-butyl-4-hydroxy-5-methylphenylthio)-5-methylphenyl] phosphite, tridecyl phosphite, octyl diphenyl phosphite, didecyl monophenyl phosphite, bis(tridecyl)pentaerythritol diphosphite, bis(nonylphenyl) pentaerythritol diphosphite, bis(2,4-di-tert-butylphenyl) pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetrakis(tridecyl)isopropylidenediphenol diphosphite, tetra(tridecyl)-4,4'-n-butylidenebis(2-tert-butyl-5-methylphenol) diphosphite, hexakis(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene 10-oxide, 2,2'-methylenebis(4,6-tert-butylphenyl)-2-ethylhexyl phosphite, 2,2'-methylenebis(4,6-tert-butylphenyl)octadecyl phosphite, 2,2'-ethylidenebis(4,6-di-tert-butylphenyl) fluorophosphite, tris(2-[(2,4,8,10-tetrakis-tert-butyldibenzo[d,f][1,3,2]dioxaphosphepin-6-yl)oxy]ethyl)ami ne, and a phosphite of 2-ethyl-2-butylpropylene glycol and 2,4,6-tri-tert-butylphenol. These phosphorus antioxidants may be used either individually or in combination of two or more thereof. In view of antioxidant effect, the phosphorus antioxidant is preferably used in an amount of 0.001 to 10 parts by mass, more preferably 0.05 to 5 parts by mass, per 100 parts by mass of the synthetic resin.

Examples of the thioether antioxidants include dialkyl thiodipropionates, such as dilauryl thiodipropionate, dimyristyl thiodipropionate, and distearyl thiodipropionate; and pentaerythritol tetrakis(β-alkylmercaptopropionates). These thioether antioxidants may be used either individually or in combination of two or more thereof. In view of antioxidant effect, the thioether antioxidant is preferably used in an amount of 0.001 to 10 parts by mass, more preferably 0.05 to 5 parts by mass, per 100 parts by mass of the synthetic resin.

Examples of the UV absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-t-octylphenyl)benzotriazole, 2-(2'-hydroxy-3',5'-dicumylphenyl)benzotriazole, 2,2'-methylenebis(4-t-octyl-6-benzotriazolylphenol), and 2-(2'-hydroxy-3'-tert-butyl-5'-carboxyphenyl)benzotriazole; benzoates, such as phenyl salicylate, resorcinol monobenzoate, 2,4-di-tert-butylphenyl 3,5-di-tert-butyl-4-hydroxybenzoate, 2,4-di-t-amylphenyl 3,5-di-tert-butyl-4-hydroxybenzoate, and hexadecyl 3,5-di-tert-butyl-4-hydroxybenzoate; substituted oxanilides, such as 2-ethyl-2'-ethoxyoxanilide and 2-ethoxy-4'-dodecyloxanilide; cyanoacrylates, such as ethyl α-cyano-β,β-diphenylacrylate and methyl 2-cyano-3-methyl-3-(p-methoxyphenyl)acrylate; and triaryltriazines, such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. These UV absorbers can be used either individually or in combination of two or more thereof. In view of UV absorbing effect, the UV absorber is preferably used in an amount of 0.001 to 30 parts by mass, more preferably 0.05 to 10 parts by mass, per 100 parts by mass of the synthetic resin.

Examples of the hindered amine light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl) bis(tridecyl) 1,2,3,4-butanetetracarboxylate, bis(1,2,2,6,6-pentamethyl-4-piperidyl) bis(tridecyl) 1,2,3,4-butanetetracarboxylate, bis(1,2,2,6,6-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/ 2,4-dichloro-6-morpholino-s-triazine polycondensate, 1,6-bis(2,2,6,6-tetramethyl-4-piperidylamino)hexane/2,4-dichloro-6-t-octylamino-s-triazi ne polycondensate, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris [2,4-bis(N-butyl-N-(2,2,6,6-tetramethyl-4-piperidyl)amino)-s-triazin-6-yl] amin oundecane, 1,6,11-tris[2,4-bis(N-butyl-N-(1,2,2,6,6-pentamethyl-4-piperidyl)amino)-s-triazin-6-yl]a minoundecane, bis(2,2,6,6-tetramethyl-1-octyloxy-4-piperidyl)decanedioate, bis(2,2,6,6-tetramethyl-1-undecyloxypeperidin-4-yl) carbonate, and TINUVIN NOR371 from BASF. These hindered amine light stabilizers can be used either individually or in combination thereof. In view of light stabilizing effect, the hindered amine light stabilizer is preferably used in an amount of 0.001 to 30 parts by mass, more preferably 0.05 to 10 parts by mass, per 100 parts by mass of the synthetic resin.

If desired, the composition of the invention may further contain additives commonly used in synthetic resins, including crosslinking agents, antistatics, antifogging agent, anti-plate-out agents, surface treating agents, plasticizers, lubricants, reinforcing materials, nucleating agents, flame retardants other than those described above, flame retardant synergists, fluorescent agents, antifungals, microbicides, foaming agents, metal deactivators, parting agents, silicone oils, silane coupling agents, fillers, hydrotalcite compounds, metal soaps, pigments, and dyes, as long as they do not impair the effects of the invention.

There are no restrictions on the timing of blending the flame retardant system and other optional components into a synthetic resin. For example, two or more components other than the synthetic resin may be pre-mixed and then added to the resin, or the components other than the synthetic resin may be added to the resin successively. When two or more components are pre-mixed, they may be either ground separately and then mixed, or mixed together first, followed by grinding. In a case where the synthetic resin is a polymer alloy prepared by blending two or more resins, the components other than the synthetic resin may be added to the polymer alloy or during the polymer blending process.

The flame retardant system and the synthetic resin may be combined either by mixing the flame retardant system into the entire amount of the synthetic resin to be used or by first preparing a masterbatch from the flame retardant system and a portion of the synthetic resin and mixing the masterbatch with the rest of the synthetic resin. The masterbatch may contain the above-mentioned optional components. The amount of the flame retardant system in the masterbatch may be at least 1 part by mass, or 10 to 90 parts by mass, per 100 parts by mass of the masterbatch.

The composition of the invention may be in any form, but in view of the handling, it is preferably in the form of pellets, powder, granules, or flakes, with pellets being more preferred.

The composition of the invention can be used, for example, to be molded either alone or in combination with other compositions, additives, or mixtures thereof. The composition of the invention is also useful as a masterbatch.

### III. Molded Articles

The molded articles of the invention can be obtained by molding the composition of the invention by various known methods. The molding techniques include, but are not limited to, extrusion, calendering, injection molding, roll forming, compression molding, and blown film extrusion. By these molding techniques, the composition can be molded into molded articles of various shapes, such as plates, sheets, films, pellets, and irregular shapes.

The composition and molded articles of the invention find wide applications in various industrial fields, including electric & elecronics, communications, agriculture, forestry, fisheries, mining, construction, foods, fibers, clothing, remedy, coal, petroleum, rubber, leather, automobiles, precision equipment, lumber, building materials, civil engineering, furniture, printing, musical instruments, and so on. Specifically, the applications include OA equipment, such as printers, personal computers, word processors, keyboards, personal digital assistants, telephone sets, copiers, fax machines, electronic cash registers, calculators, electronic diaries, cards, holders, and writing tools; household electric appliances, such as laundry machines, refrigerators, vacuum cleaners, microwave ovens, lighting equipment, game machines, irons, and *kotatsu;* audiovisual equipment, including TV sets, VTRs, camcorders, radio-cassette players, tape recorders, mini discs, CD players, speakers, and liquid crystal displays; and electrical and electronic components and communication equipment, such as connectors, relays, capacitors, switches, printed circuit boards, coil bobbins, semiconductor sealants, LED sealants, electric wires, cables, transformers, deflection yokes, distribution boards, and clocks.

The composition and molded articles of the invention can also be used for optical material applications and glass alternative applications, such as optical discs, CD discs, DVD discs, and lenses.

The composition and molded articles of the invention also finds use as materials for automobiles, railroad cars, boats, ships, aircrafts, buildings, houses, and civil engineering, such as seats (including stuffing and upholstery), belts, ceiling covering, convertible tops, arm rests, door trims, rear package trays, carpets, rugs, mats, sun visors, wheel covers, mattress covers, air bags, insulating materials, assist grips, assist straps, wire covering, electrical insulators, paints, coatings, overlays, flooring, inside corner moldings, carpets, rugs, wallpaper, wall covering, exterior covering, interior covering, roofing, decks, walls, pillars, floor plates, fences, framing, moldings, profiles for windows and doors, roof shingles, siding boards, terraces, balconies, soundproofing boards, heat insulating boards, and window boards; and housewares and sporting equipment, such as clothing, curtains, bed sheets, chip boards, fiber boards, carpets, rugs, doormats, sheets, buckets, hoses, containers, glasses, bags, cases, goggles, skis, rackets, tents, and musical instruments.

The disclosure also includes the following clauses.
1. A flame retardant system including (A) a hindered amine compound represented by general formula (1): 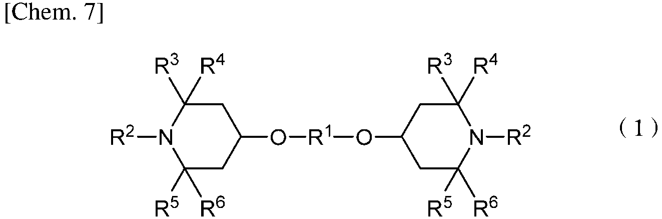
   wherein R¹ represents a group of formula (2), (3), or (4) below; R² represents a hydrocarbon group having 1 to 18 carbon atoms; and R³, R⁴, R⁵, and R⁶ each independently represent an alkyl group having 1 to 4 carbon atoms: 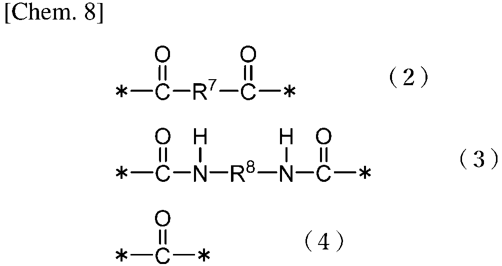
   wherein R⁷ and R⁸ each independently represent a direct bond or a divalent hydrocarbon group having 1 to 18 carbon atoms; and the asterisk represents a bonding site.
2. The flame retardant system of clause 1, wherein R¹ in formula (1) is a group of formula (2).
3. The flame retardant system of clause 1 or 2, wherein R⁷ in formula (2) is an alkylene group having 2 to 14 carbon atoms.
4. The flame retardant system of any one of clauses 1 to 3, further including (B) a phosphorus flame retardant.
5. The flame retardant system of clause 4, wherein the phosphorus flame retardant (B) is at least one member selected from the group consisting of phosphoric ester flame retardants, phosphonic ester flame retardants, phosphinic ester flame retardants, and phosphinic acid metal salt flame retardants.
6. The flame retardant system of clause 4 or 5, wherein the phosphorus flame retardant (B) is present in an amount of 10 to 5,000 parts by mass per 100 parts by mass of the hindered amine compound (A).
7. The flame retardant system of any one of clauses 4 to 6, wherein the phosphorus flame retardant (B) includes two or more different compounds.
8. The flame retardant system of any one of clauses 4 to 7, further including (C) a nitrogen flame retardant.
9. A composition including the flame retardant system of any one of clauses 1 to 8 and a synthetic resin.
10. A molded article from the composition of clause 9.

### Examples

The invention will now be illustrated in greater detail by way of Examples, but it should be understood that the invention is not limited thereto.

### Examples 1 to 30 and Comparative Examples 1 to 15

The components in the amounts shown in Tables 1 to 3 below were mixed. The mixture was melt-kneaded and extruded into resin strands using an Labo-Plastomill µ equipped with a twin extruder 2D15W, both from Toyo Seiki Seisakusho, Ltd., at a melt temperature of 200°C and a screw speed of 25 rpm. The resin strands were cut using a pelletizer to obtain compositions in the form of pellets. The amounts shown in Tables 1 and 2 are given in parts by mass.

The components described in Tables 1 and 2 are as follows:
- LLDPE-1: Linear low-density polyethylene resin UR952G from Japan Polyethylene Corp.; MFR (JIS K7210, load 2.16 kg, temperature 190°C) 5.0 g/10 min)
- LLDPE-2: Linear low-density polyethylene resin F30FG from Japan Polyethylene Corp.; MFR (JIS K7210, load 2.16 kg, temperature 190°C) 1.0 g/10 min)
- (A)-1: compound No. 2
- (A)-2: compound No. 3
- (A)-3: compound No. 5
- (A)-4: compound No. 6
- (A)-5: compound No. 7
- (A)-6: compound No. 8
- (A)-7: compound No. 9
- (A)-8: compound No. 10
- (A)-9: compound No. 12
- (A)-10: compound No. 13
- (A)-X1: tetrakis(1,2,2,6,6-pentamethyl-4-piperidyl)butane 1,2,3,4-tetracarboxylate
- (A)-X2: dimethyl succinate/4-hydroxy-1-(2-hydroxyethyl)-2,2,6,6-tetramethylpiperidine polycondensate
- (A)-X3: N,N',4,7-tetrakis{4,6-bis[N-butyl-N-(1,2,2,6,6-pentamethyl-4-piperidyl)ami no]-1,3,5-triazin-2-yl}-4,7-diazadecane 1,10-diamine
- (A)-X4: bis(2,2,6,6-tetramethylpiperidyl) sebacate
- (B)-1: pentaerythritol bis(methyl phosphonate)
- (B)-2: pentaerythritol bis(benzyl phosphonate)
- (B)-3: 10-phenoxy-9,10-dihydro-9-oxa-10-phosphaphenanthrene 10-oxide
- (B)-4: 6,6'-(1,2-ethanediyl)bis(6H-dibenz[c,e][1,2]oxaphospholine) 6,6'-dioxide
- (B)-5: hydroquinone bis(diphenyl phosphate) polycondensate
- (B)-6: bisphenol A bis(diphenyl phosphate) polycondensate
- (B)-7: 4,4'-biphenol bis(diphenyl phosphate) polycondensate
- (B)-8: resorcinol bis(2,6-xylenyl phosphate)
- (B)-9: aluminum diethylphosphinate
- (C)-1: melamine cyanurate
- Antiox 1: stearyl (3,5-di-t-butyl-4-hydroxyphenyl)propionate
- Antiox 2: tris(2,4-di-t-butylphenyl) phosphite

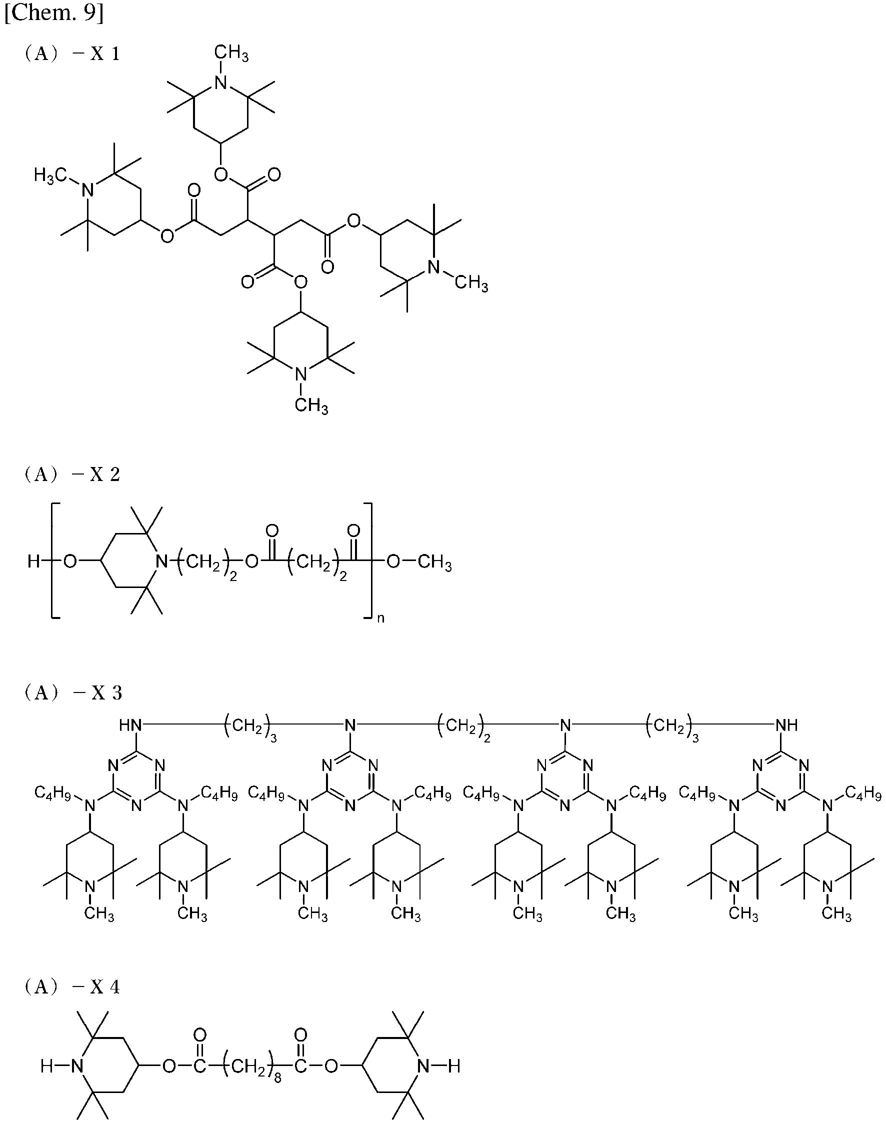

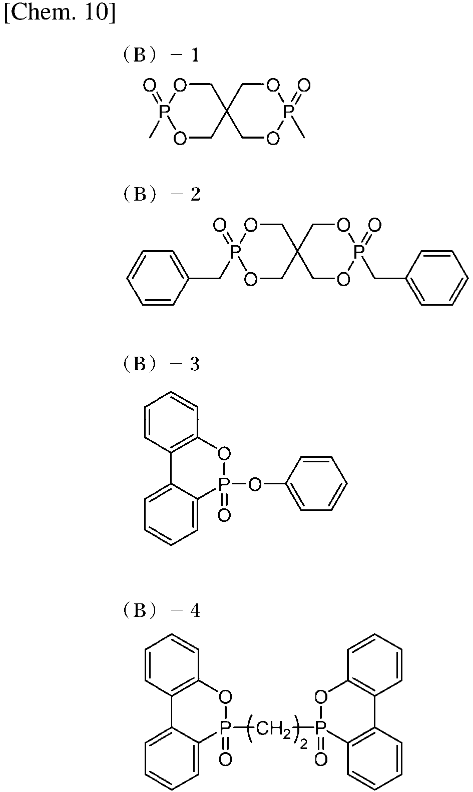

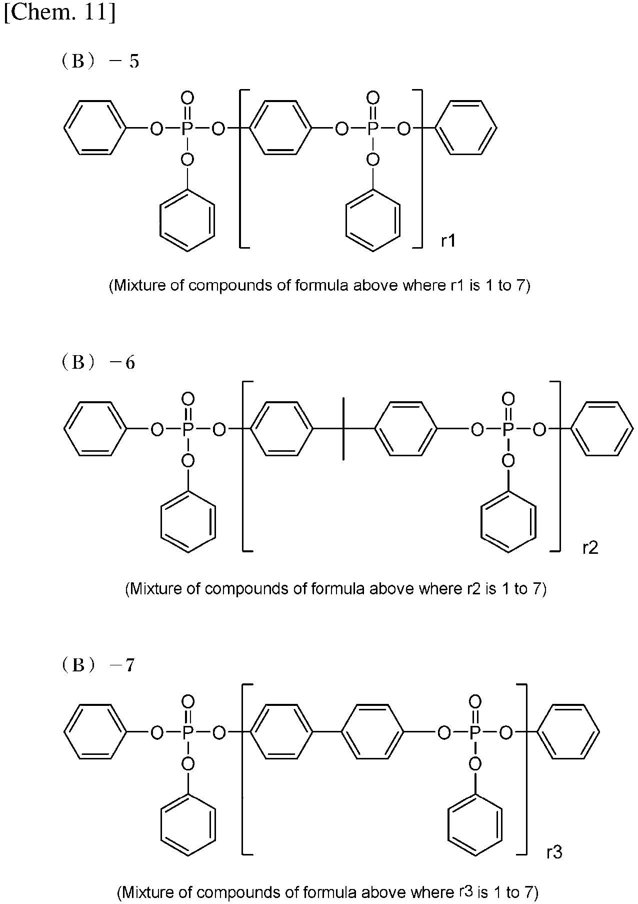

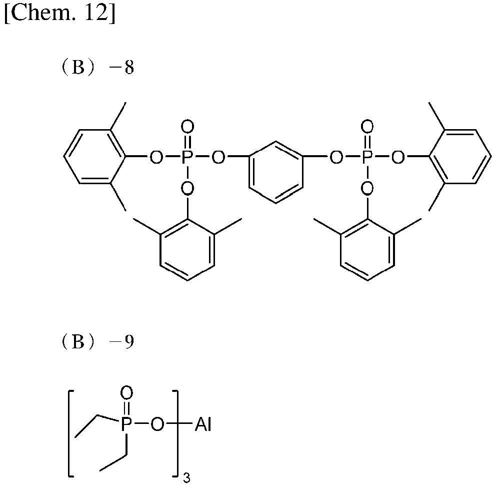

### Preparation of test specimens

The pellets obtained were molded into a cast film with a thickness of 200 µm using Labo Plastomill µ equipped with a single-screw extruder D1220B and a T-die MT60B, all from Toyo Seiki Seisakusho, Ltd., under conditions of a melt temperature of 200°C, a screw speed of 30 rpm, a T-die extrusion temperature of 200°C, a chill roll temperature of 60°C, and a roll revolution speed of 0.40 to 0.45 rpm. Test specimens measuring 25 cm by 5 cm and those measuring 20 cm by 5 cm were cut from the resulting cast film. After being left in an environment of 23±2°C, 50±5% RH for 48 hours, the specimens were evaluated for flame retardance using the following test methods.

### Evaluation of flame retardance - Horizontal burning test

The 25 cm by 5 cm specimen was placed horizontally. A flame of a Bunsen burner (inner diameter: 9.5 mm, flame length: 38 mm) was applied to the center of the specimen's width for 15 seconds, and the flaming time and the burning distance in the longitudinal direction until the flame disappeared were measured to calculate the flaming rate. A set of three specimens per sample film were tested (n = 3) to obtain the average. A shorter burning distance and a lower flaming rate mean higher flame retardancy. The results obtained are shown in Tables 1 and 2.

### Evaluation of flame retardance - UL-94VTM

The specimen was longitudinally rolled, without an overlap at its longitudinal end, to form a cone. The cone was held vertically with its bottom positioned 10 mm above the tip of a Bunsen burner (inner diameter: 9.5 mm, flame length: 20 mm). The flame was applied to the bottom of the specimen for 3 seconds and then removed to measure the afterflame time (sec). After the flame disappeared, the flame was reapplied for another 3 seconds and then removed to measure the afterflame plus afterglow time. The flame retardance was evaluated according to VTM rating system: VTM-0, VTM-1, and VTM-2. A set of 5 specimens per sample film were tested (n = 5), and the lowest rating of the five per sample film was taken as the rating of the resin composition. Specimens that did not fall under any of VTM-0, VTM-1, or VTM-2 ratings were classified as "Not V". The results obtained are shown in Tables 1 and 2.

### Evaluation of bleed resistance

A piece measuring 30 mm by 40 mm was cut from the cast film. After the cut piece was left in an environment of 23±2°C, 50±5% RH for 240 hours, the surface of the cut piece was observed with the naked eye to evaluate bleed resistance according to the following evaluation criteria. Evaluation ratings A and B are considered to be acceptable for practical use. The results are shown in Tables 1 and 2.
- A: No bleeding was observed.
- B: Slight bleeding was observed to a degree acceptable for practical use.
- C: Bleeding was clearly observed to a degree unsuitable for practical use.

**Table 1-1**

| | | | Example | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 |
| Composition | Synthetic Resin | LLDPE-1 | 98.9 | 98.9 | 98.9 | 98.9 | 98.9 | 98.9 | 98.9 | 98.9 | 98.9 | 98.9 | 99.6 | 97.9 | 95.9 | 99.6 | 97.9 | 95.9 |
| | Flame Retardant System | (A)-1 | 1 | | | | | | | | | | | | | | | |
| | | (A)-2 | | 1 | | | | | | | | | 0.3 | 2 | 4 | | | |
| | | (A)-3 | | | 1 | | | | | | | | | | | 0.3 | 2 | 4 |
| | | (A)-4 | | | | 1 | | | | | | | | | | | | |
| | | (A)-5 | | | | | 1 | | | | | | | | | | | |
| | | (A)-6 | | | | | | 1 | | | | | | | | | | |
| | | (A)-7 | | | | | | | 1 | | | | | | | | | |
| | | (A)-8 | | | | | | | | 1 | | | | | | | | |
| | | (A)-9 | | | | | | | | | 1 | | | | | | | |
| | | (A)-10 | | | | | | | | | | 1 | | | | | | |
| | | (A)-X1 | | | | | | | | | | | | | | | | |
| | | (A)-X2 | | | | | | | | | | | | | | | | |
| | | (A)-X3 | | | | | | | | | | | | | | | | |
| | | (A)-X4 | | | | | | | | | | | | | | | | |
| | Antioxidant | Antiox 1 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | | Antiox 2 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Evaluation | Horizontal Burning Test: Burning distance (cm) | | 9 | 12 | 7 | 10 | 17 | 10 | 8 | 15 | 17 | 16 | 15 | 8 | 6 | 12 | 6 | 4 |
| | Horizontal Burning Test: Flaming Rate (cm/min) | | 17 | 18 | 18 | 17 | 18 | 15 | 18 | 20 | 19 | 18 | 20 | 20 | 17 | 20 | 17 | 16 |
| | Bleed Resistance | | A | A | A | A | A | A | A | A | A | A | A | A | A | A | A | A |

**Table 1-2**

| | | | Comparative Example | | | | |
|---|---|---|---|---|---|---|---|
| | | | 1 | 2 | 3 | 4 | 5 |
| Composition | Synthetic Resin | LLDPE-1 | 99.9 | 98.9 | 98.9 | 98.9 | 98.9 |
| | Flame Retardant System | (A)-1 | | | | | |
| | | (A)-2 | | | | | |
| | | (A)-3 | | | | | |
| | | (A)-4 | | | | | |
| | | (A)-5 | | | | | |
| | | (A)-6 | | | | | |
| | | (A)-7 | | | | | |
| | | (A)-8 | | | | | |
| | | (A)-9 | | | | | |
| | | (A)-10 | | | | | |
| | | (A)-X1 | | 1 | | | |
| | | (A)-X2 | | | 1 | | |
| | | (A)-X3 | | | | 1 | |
| | | (A)-X4 | | | | | 1 |
| | Antioxidant | Antiox 1 | 0.05 | 0.05 | 0.05 | 0.05 | 0.05 |
| | | Antiox 2 | 0.05 | 0.05 | 0.05 | 0.05 | 0.05 |
| Evaluation | Horizontal Burning Test: Burning distance (cm) | | 25 | 25 | 25 | 25 | 25 |
| | Horizontal Burning Test: Flaming Rate (cm/min) | | 30 | 30 | 31 | 29 | 28 |
| | Bleed Resistance | | A | A | A | A | C |

Table 1 shows the results of the burning test on the specimens containing an LLDPE resin and a hindered amine compound. In the horizontal burning test, the specimen that did not contain a flame retardant (Comparative Example 1) and those containing a compound whose structure was different from general formula (1) according to the invention did not extinguish until it burned out completely. In contrast, the specimens containing the compound of formula (1) (Examples 1 to 16) had shorter burning distances and lower flaming rates than those of Comparative Examples 1 to 5.

**Table 2-1**

| | | | Example | | | | | | | | | | | | | |
|---|---|---|---|---|---|---|---|---|---|---|---|---|---|---|---|---|
| | | | 17 | 18 | 19 | 20 | 21 | 22 | 23 | 24 | 25 | 26 | 27 | 28 | 29 | 30 |
| Composition | Synthetic Resin | LLDPE-1 | 96.4 | 98.4 | 96.4 | 86.4 | 95.9 | 93.9 | 93.9 | 93.9 | 95.9 | 94.4 | 92.4 | 91.9 | 91.9 | 88.9 |
| | Flame Retardant System | (A)-1 | 0.5 | | | | | | | | | | | | | |
| | | (A)-2 | | 0.5 | 0.5 | 0.5 | 1 | 1 | | | | | | | | |
| | | (A)-3 | | | | | | | | | 1 | 0.5 | 0.5 | | | |
| | | (A)-4 | | | | | | | | | | | | 1 | | |
| | | (A)-7 | | | | | | | | | | | | | 1 | 1 |
| | | (A)-9 | | | | | | | 1 | | | | | | | |
| | | (A)-10 | | | | | | | | 1 | | | | | | |
| | | (A)-X4 | | | | | | | | | | | | | | |
| | | (B)-1 | 3 | 1 | 3 | 13 | 3 | 5 | 5 | 5 | | | | | | |
| | | (B)-2 | | | | | | | | | 3 | 5 | 7 | | | |
| | | (B)-3 | | | | | | | | | | | | 7 | | |
| | | (B)-4 | | | | | | | | | | | | | 7 | 10 |
| | Antioxidant | Antiox 1 | 0.05 | 0.05 | 0.05 | 0.05 | 0.05 | 0.05 | 0.05 | 0.05 | 0.05 | 0.05 | 0.05 | 0.05 | 0.05 | 0.05 |
| | | Antiox 2 | 0.05 | 0.05 | 0.05 | 0.05 | 0.05 | 0.05 | 0.05 | 0.05 | 0.05 | 0.05 | 0.05 | 0.05 | 0.05 | 0.05 |
| Evaluation | Horizontal Burning Test: Burning distance (cm) | | 2 | 5 | 5 | 2 | 3 | 2 | 3 | 2 | 3 | 2 | 2 | 4 | 2 | 2 |
| | Horizontal Burning Test: Flaming Rate (cm/min) | | 12 | 16 | 17 | 13 | 15 | 14 | 15 | 14 | 16 | 15 | 14 | 17 | 17 | 15 |
| | UL-94VTM | | VTM-0 | VTM-2 | VTM-0 | VTM-0 | VTM-0 | VTM-0 | VTM-0 | VTM-0 | VTM-2 | VTM-0 | VTM-0 | VTM-2 | VTM-2 | VTM-0 |
| | Bleed Resistance | | A | A | A | B | A | A | A | A | A | A | A | B | B | B |

**Table 2-2**

| | | | Comparative Example | | | | | | | | | | |
|---|---|---|---|---|---|---|---|---|---|---|---|---|---|
| | | | 1 | 6 | 7 | 8 | 9 | 10 | 11 | 12 | 13 | 14 | 15 |
| Composition | Synthetic Resin | LLDPE-1 | 99.9 | 92.9 | 92.9 | 92.9 | 92.9 | 93.9 | 95.9 | 94.4 | 92.4 | 91.9 | 91.9 |
| | Flame Retardant System | (A)-1 | | | | | | | | | | | |
| | | (A)-2 | | | | | | | | | | | |
| | | (A)-3 | | | | | | | | | | | |
| | | (A)-4 | | | | | | | | | | | |
| | | (A)-7 | | | | | | | | | | | |
| | | (A)-9 | | | | | | | | | | | |
| | | (A)-10 | | | | | | | | | | | |
| | | (A)-X4 | | | | | | 1 | 1 | 0.5 | 0.5 | 1 | 1 |
| | | (B)-1 | | 7 | | | | 5 | | | | | |
| | | (B)-2 | | | 7 | | | | 3 | 5 | 7 | | |
| | | (B)-3 | | | | 7 | | | | | | 7 | |
| | | (B)-4 | | | | | 7 | | | | | | 7 |
| | Antioxidant | Antiox 1 | 0.05 | 0.05 | 0.05 | 0.05 | 0.05 | 0.05 | 0.05 | 0.05 | 0.05 | 0.05 | 0.05 |
| | | Antiox 2 | 0.05 | 0.05 | 0.05 | 0.05 | 0.05 | 0.05 | 0.05 | 0.05 | 0.05 | 0.05 | 0.05 |
| Evaluation | Horizontal Burning Test: Burning distance (cm) | | 25 | 3 | 4 | 10 | 8 | 6 | 25 | 7 | 4 | 12 | 7 |
| | Horizontal Burning Test: Flaming Rate (cm/min) | | 30 | 18 | 17 | 19 | 18 | 16 | 20 | 18 | 17 | 18 | 16 |
| | UL-94VTM | | NOT V | VTM-2 | VTM-2 | NOT V | NOT V | NOT V | NOT V | NOT V | VTM-2 | NOT V | NOT V |
| | Bleed Resistance | | A | A | A | B | B | C | C | C | C | C | C |

Table 2 shows the results of the burning test on the specimens containing an LLDPE resin, a hindered amine compound, and a phosphorus flame retardant. In cases where the phosphorus flame retardant was incorporated into the flame retardant system, the specimens containing the compound of formula (1) (Examples 17 to 30) were excellent in flame retardance as evidenced by their burning distance and flaming rate in the horizontal burning test as well as their UL-94VTM rating, compared with the specimens containing a compound whose structure was different from general formula (1) (Comparative Examples 6 to 15).

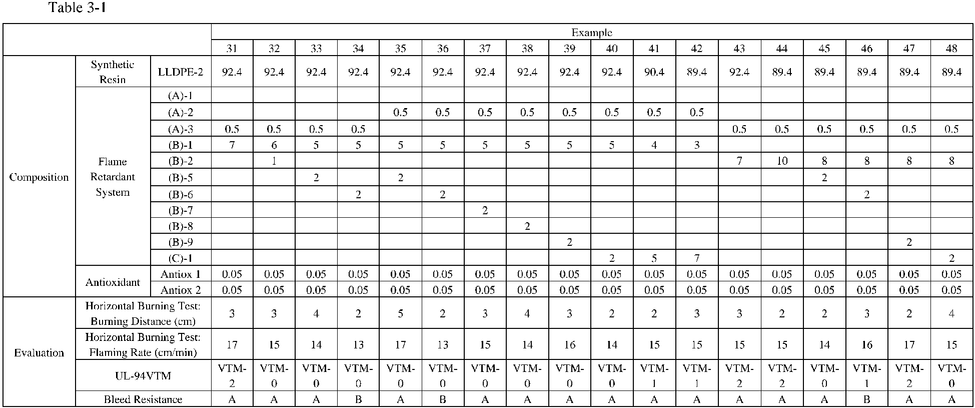

**Table 3-2**

| | | | Comparative Example | | | | | | | | | | | | |
|---|---|---|---|---|---|---|---|---|---|---|---|---|---|---|---|
| | | | 16 | 17 | 18 | 19 | 20 | 21 | 22 | 23 | 24 | 25 | 26 | 27 | 28 |
| Composition | Synthetic Resin | LLDPE-2 | 99.9 | 92.9 | 92.9 | 92.9 | 97.9 | 92.9 | 97.9 | 92.9 | 97.9 | 92.9 | 97.9 | 92.9 | 92.9 |
| | Flame Retardant System | (A)-1 | | | | | | | | | | | | | |
| | | (A)-2 | | | | | | | | | | | | | |
| | | (A)-3 | | | | | | | | | | | | | |
| | | (B)-1 | | 7 | | | | | | | | | | | |
| | | (B)-2 | | | 7 | | | | | | | | | | |
| | | (B)-5 | | | | 7 | 2 | | | | | | | | |
| | | (B)-6 | | | | | | 7 | 2 | | | | | | |
| | | (B)-7 | | | | | | | | 7 | 2 | | | | |
| | | (B)-8 | | | | | | | | | | 7 | 2 | | |
| | | (B)-9 | | | | | | | | | | | | 7 | |
| | | (C)-1 | | | | | | | | | | | | | 7 |
| | Antioxidant | Antiox 1 | 0.05 | 0.05 | 0.05 | 0.05 | 0.05 | 0.05 | 0.05 | 0.05 | 0.05 | 0.05 | 0.05 | 0.05 | 0.05 |
| | | Antiox 2 | 0.05 | 0.05 | 0.05 | 0.05 | 0.05 | 0.05 | 0.05 | 0.05 | 0.05 | 0.05 | 0.05 | 0.05 | 0.05 |
| Evaluation | Horizontal Burning Test: Burning distance (cm) | | 25 | 4 | 7 | 14 | 25 | 25 | 25 | 14 | 25 | 18 | 25 | 25 | 25 |
| | Horizontal Burning Test: Flaming Rate (cm/min) | | 34 | 15 | 18 | 18 | 22 | 15 | 23 | 19 | 27 | 21 | 26 | 18 | 16 |
| | UL-94VTM | | NOT V | NOT V | NOT V | NOT V | NOT V | NOT V | NOT V | NOT V | NOT V | NOT V | NOT V | NOT V | NOT V |
| | Bleed Resistance | | A | A | A | C | A | C | B | C | A | C | A | A | A |

Table 3 shows the results of the burning test on the specimens containing an LLDPE resin different in MFR from that in Tables 1 and 2, a hindered amine compound, a phosphorus flame retardant, and a nitrogen flame retardant. The specimens containing the compound of formula (1) of the invention and the phosphorus flame retardant (Examples 31, 43, and 44) had excellent flame retardance as evidenced by their burning distance and flaming rate in the horizontal burning test as well as their UL-94VTM rating, compared with the specimens containing only the phosphorus flame retardant as a flame retardant system (Comparative Examples 17 to 27). The specimens containing the compound of formula (1) and two different phosphorus flame retardants (Examples 32 to 39 and 45 to 47) and those containing the compound of formula (1), the phosphorus flame retardant, and the nitrogen flame retardant (Examples 40 to 42 and 48) exhibited even better flame retardance in terms of burning distance and flaming rate in the horizontal burning test and UL-94VTM rating.

All the foregoing results demonstrate that the flame retardance system of the invention imparts excellent flame retardancy to resins.

## Claims

1. A flame retardant system comprising (A) a hindered amine compound represented by general formula (1): 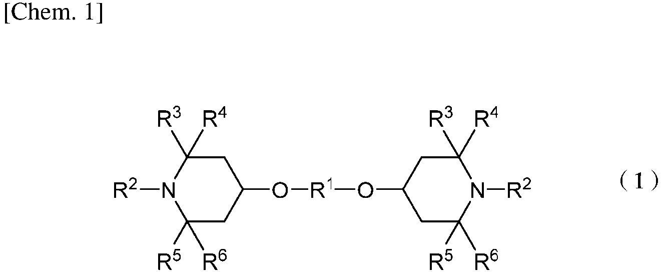
wherein R¹ represents a group of formula (2), (3), or (4) below; R² represents a hydrocarbon group having 1 to 18 carbon atoms; and R³, R⁴, R⁵, and R⁶ each independently represent an alkyl group having 1 to 4 carbon atoms: 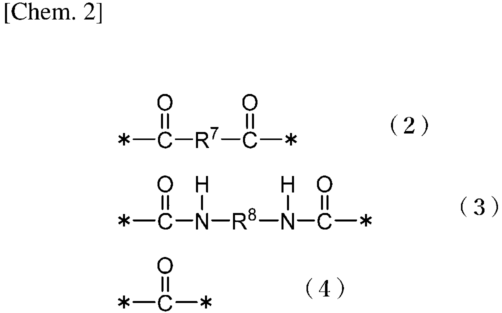
wherein R⁷ and R⁸ each independently represent a direct bond or a divalent hydrocarbon group having 1 to 18 carbon atoms; and the asterisk represents a bonding site.

2. The flame retardant system of claim 1, wherein R¹ is a group of formula (2).

3. The flame retardant system of claim 2, wherein R⁷ is an alkylene group having 2 to 14 carbon atoms.

4. The flame retardant system of claim 1, further comprising (B) a phosphorus flame retardant.

5. The flame retardant system of claim 4, wherein the phosphorus flame retardant (B) is at least one member selected from the group consisting of phosphoric ester flame retardants, phosphonic ester flame retardants, phosphinic ester flame retardants, and phosphinic acid metal salt flame retardants.

6. The flame retardant system of claim 4, wherein the phosphorus flame retardant (B) is present in an amount of 10 to 5,000 parts by mass per 100 parts by mass of the hindered amine compound (A).

7. The flame retardant system of claim 4, wherein the phosphorus flame retardant (B) comprises two or more different compounds.

8. The flame retardant system of claim 4, further comprising (C) a nitrogen flame retardant.

9. A composition comprising the flame retardant system of any one of claims 1 to 8 and a synthetic resin.

10. A molded article from the composition of claim 9.
